# EUROPEAN PATENT SPECIFICATION

(11) **EP 2 522 191 B1**
(45) Date of publication and mention of the grant of the patent: **07.04.2021**
(21) Application number: 10701331.0
(22) Date of filing: 05.01.2010
(51) Int. Cl.: H04W 76/19

(54) **RE-ESTABLISHMENT OF COMPONENT CARRIERS IN A WIRELESS COMMUNICATION SYSTEM**
WIEDERHERSTELLUNG VON KOMPONENTENTRÄGERN IN EINEM DRAHTLOSEN KOMMUNIKATIONSSYSTEM
RÉTABLISSEMENT DE PORTEUSES DE COMPOSANT DANS UN SYSTÈME DE COMMUNICATION SANS FIL

(43) Date of publication of application: 14.11.2012
(73) Proprietor: Nokia Solutions and Networks Oy, 02610 Espoo (FI)
(72) Inventor: SEBIRE, Benoist Pierre, Tokyo 162-0825 (JP); WU, Chunli, Beijing 102208 (CN); HWANG, Woonhee, FI-02180 Espoo (FI)
(74) Representative: Nokia EPO representatives
(86) International application number: PCT/EP2010/050037
(87) International publication number: WO 2011/082822

(56) References cited:
- HUAWEI: "Discussion on RLF in DC-HSDPA" 3GPP DRAFT; R2-084402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080811, 11 August 2008 (2008-08-11), XP050319471 [retrieved on 2008-08-11]
- HUAWEI: "RLF consideration in DC-HSDPA" 3GPP DRAFT; R2-086693 RLF CONSIDERATION IN DC-HSDPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321562 [retrieved on 2008-11-04]
- QUALCOMM EUROPE: "Notion of Anchor Carrier in LTE-A" 3GPP DRAFT; R1-090356, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318262 [retrieved on 2009-01-08]

## Description

The invention relates to carrier aggregation, and more particularly to re-establishment of component carriers in communication systems providing carrier aggregation.

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communications may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless communication system at least a part of communications between at least two stations occurs over a wireless link. Examples of wireless systems include public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

Carrier aggregation can be used to increase performance. In carrier aggregation a plurality of carriers are aggregated to increase bandwidth. Carrier aggregation comprises aggregating a plurality of component carriers into a carrier that is referred to in this specification as aggregated carrier.

The communication system and associated devices typically operate in accordance with a given standard or specification which sets out what the various entities associated with the system are permitted to do and how that should be achieved. For example, it can be defined if carrier aggregation is used. Communication protocols and/or parameters which shall be used for the connection are also typically defined. An example of attempts to solve the problems associated with the increased demands for capacity is an architecture that is known as the long-term evolution (LTE) of the Universal Mobile Telecommunications System (UMTS) radio-access technology. The LTE is being standardized by the 3^{rd} Generation Partnership Project (3GPP). The various development stages of the 3GPP LTE specifications are referred to as releases. The aim of the standardization is to achieve a communication system with, inter alia, reduced latency, higher user data rates, improved system capacity and coverage, and reduced cost for the operator. A further development of the LTE is referred to as LTE-Advanced (LTE-A). The LTE-Advanced aims to provide further enhanced services by means of even higher data rates and lower latency with reduced cost.

A feature of the LTE-Advanced is that it is capable of providing carrier aggregation. In LTE-A two or more component carriers (CCs) can be aggregated in order to support wider transmission bandwidths, such as up to 100MHz, and/or for spectrum aggregation. It is possible to configure a user equipment (UE) to aggregate a different number of component carriers originating from the same base station, i.e. a LTE eNB, and of possibly different bandwidths in the uplink (UL) and the downlink (DL) component carrier sets.

A user equipment can initiate a radio resource control (RRC) connection re-establishment after it has detected a trigger for a need of such. For example, the procedure may be triggered by detection of a radio link failure (RLF) on a component carrier. The criteria for radio link failure detection can include, for example a timer expiry such as T310 expiry, a random access problem indication from medium access control (MAC), an indication from radio link control (RLC) that the maximum number of retransmissions has been reached and so on.

For carrier aggregation, it has been agreed that detection of a failure of a component carrier by the user equipment does not trigger connection re-establishment. Instead, a radio resource control (RRC) connection re-establishment can be triggered at the user equipment only in response to detection of the failure of all component carriers on which the user equipment is configured to receive a Physical Downlink Control Channel (PDCCH), an indication from medium access control (MAC) of a random access problem resulting in the loss of all uplink communications, and/or an indication from radio link control (RLC) that the maximum number of retransmissions has been reached.

The concept of a primary component carrier has also been proposed. The primary component carrier would be provided by a cell where the user equipment performs radio resource control (RRC) connection establishment, and can thus be foreseen as the cell governing the discontinuous reception (DRX). However, the primary component carrier, unlike other component carriers, cannot be de-activated. Thus a loss of the primary component carrier triggers a radio link failure. An example of radio link failure for component carriers is shown in the document titled: "RLF handling for CC" by Alcatel-Lucent, R2-096824, 3GPP TSG RAN WG2 #68.

It is noted that the above discussed issues are not limited to any particular communication environment, but may occur in any appropriate communication system where carrier aggregation may be provided.

Embodiments of the invention aim to address one or several of the above issues.

In accordance with an embodiment there is provided a method as defined in claim 1.

A control apparatus for a communication device adapted for communications on a configured set of component carriers is provided for in claim 4. A mobile communication device is provided for in claim 8.

A computer program comprising program code means adapted to perform the method is provided for in claim 9.

Various other aspects and further embodiments are also described in the following detailed description and in the attached claims.

The invention will now be described in further detail, by way of example only, with reference to the following examples and accompanying drawings, in which:
Figure 1 shows an example of a communication system in which the embodiments of the invention may be implemented;
Figure 2 shows an example of a communication device;
Figure 3 shows an example of an aggregated carrier;
Figures 4 and 5 are flowcharts illustrating certain embodiments; and
Figure 6 shows a signalling flow for an embodiment.

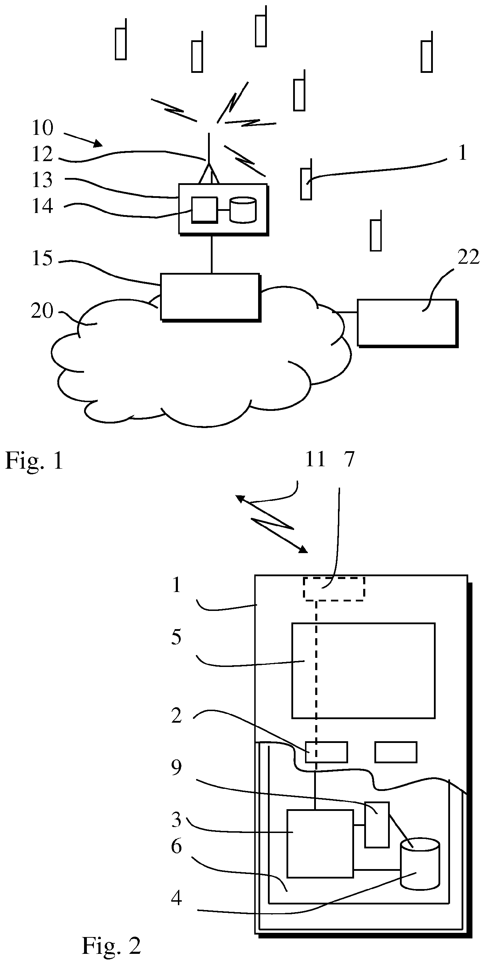

In the following certain exemplifying embodiments are explained with reference to wireless or mobile communication systems serving mobile communication devices. Before explaining in detail the certain exemplifying embodiments, certain general principles of a wireless communication system and mobile communication devices are briefly explained with reference to Figures 1 and 2 to assist in understanding the technology underlying the described examples.

A communication device can be used for accessing various services and/or applications provided via a communication system. In wireless or mobile communication systems the access is provided via a wireless access interface between mobile communication devices 1 and an appropriate access system 10.

A mobile device 1 can typically access wirelessly a communication system via at least one base station 12 or similar wireless transmitter and/or receiver node of the access system. A base station site typically provides one or more cells of a cellular system. In the figure 1 example the base station 12 is configured to provide a cell, but could provide, for example, three sectors, each sector providing a cell. Each mobile device 1 and base station may have one or more radio channels open at the same time and may receive signals from more than one source.

A base station is typically controlled by at least one appropriate controller so as to enable operation thereof and management of mobile communication devices in communication with the base station. The control entity can be interconnected with other control entities. In Figure 1 the controller is shown to be provided by block 13. An appropriate controller apparatus may comprise at least one memory, at least one data processing unit and an input/output interface. The controller is thus typically provided with memory capacity and at least one data processor 14. It shall be understood that the control functions may be distributed between a plurality of controller units. The controller apparatus for e base station may be configured to execute an appropriate software code to provide the control functions as explained below in more detail.

In the Figure 1 example the base station node 12 is connected to a data network 20 via an appropriate gateway 15. A gateway function between the access system and another network such as a packet data network may be provided by means of any appropriate gateway node, for example a packet data gateway and/or an access gateway. A communication system may thus be provided by one or more interconnect networks and the elements thereof, and one or more gateway nodes may be provided for interconnecting various networks.

A communication device can be used for accessing various services and/or applications. The communication devices can access the communication system based on various access techniques, such as code division multiple access (CDMA), or wideband CDMA (WCDMA). The latter technique is used by communication systems based on the third Generation Partnership Project (3GPP) specifications. Other examples include time division multiple access (TDMA), frequency division multiple access (FDMA), space division multiple access (SDMA) and so on. A non-limiting example of mobile architectures where the herein described principles may be applied is known as the Evolved Universal Terrestrial Radio Access Network (E-UTRAN).

Non-limiting examples of appropriate access nodes are a base station of a cellular system, for example what is known as NodeB or enhanced NodeB (eNB) in the vocabulary of the 3GPP specifications. The eNBs may provide E-UTRAN features such as user plane Radio Link Control/Medium Access Control/Physical layer protocol (RLC/MAC/PHY) and control plane Radio Resource Control (RRC) protocol terminations towards mobile communication devices. Other examples include base stations of systems that are based on technologies such as wireless local area network (WLAN) and/or WiMax (Worldwide Interoperability for Microwave Access).

Figure 2 shows a schematic, partially sectioned view of a communication device 1 that can be used for communication on an aggregated carrier 11 comprising a plurality of component carriers with at least one other wireless station. An appropriate mobile communication device may be provided by any device capable of sending and receiving radio signals. Non-limiting examples include a mobile station (MS) such as a mobile phone or what is knows as a 'smart phone', a portable computer provided with a wireless interface card or other wireless interface facility, personal data assistant (PDA) provided with wireless communication capabilities, or any combinations of these or the like.

A mobile communication device may be used for voice and video calls, for accessing service applications provided via a data network. The mobile device 1 may receive signals via appropriate apparatus for receiving and transmitting radio signals on wireless carriers, or radio bearers. In Figure 2 a transceiver is designated schematically by block 7. The transceiver may be provided for example by means of a radio part and associated antenna arrangement. The antenna arrangement may be arranged internally or externally to the mobile device. A mobile device is also typically provided with at least one data processing entity 3, at least one memory 4 and other possible components 9 for use in tasks it is designed to perform. The data processing, storage and other entities can be provided on an appropriate circuit board and/or in chipsets. This feature is denoted by reference 6. The user may control the operation of the mobile device by means of a suitable user interface such as key pad 2, voice commands, touch sensitive screen or pad, combinations thereof or the like. A display 5, a speaker and a microphone are also typically provided. Furthermore, a mobile device may comprise appropriate connectors (either wired or wireless) to other devices and/or for connecting external accessories, for example hands-free equipment, thereto.

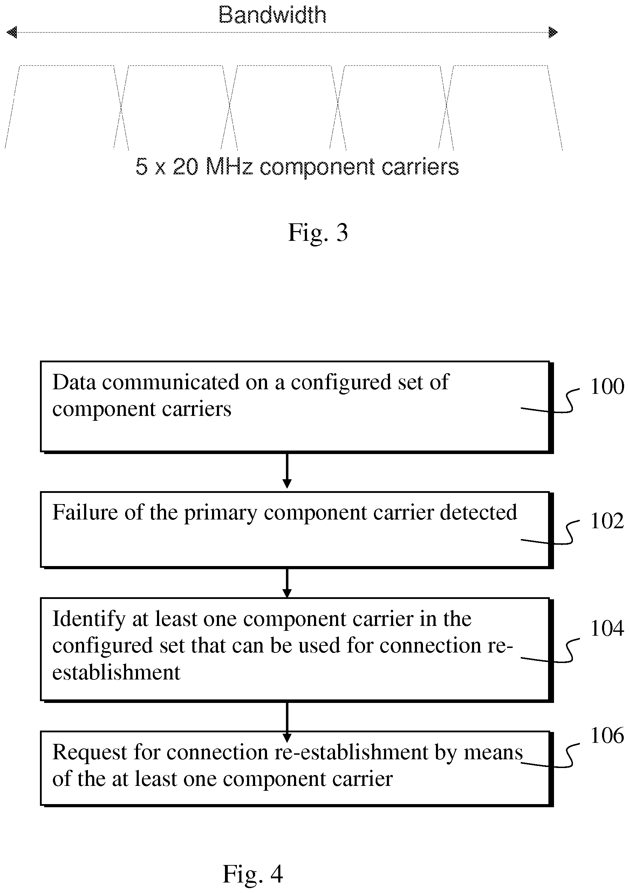

The principle of carrier aggregation is illustrated in Figure 3 showing use of five component carriers to form system bandwidth. As explained above, 3GPP LTE release 8 provides only one carrier and compatible terminals are assumed to be served by a stand-alone component carrier. However, 3GPP LTE-Advanced terminals adapted for operation in accordance with release 9 and upwards can receive or transmit simultaneously on multiple aggregated component carriers in the same transmission time interval (TTI). That is, two or more carriers, referred to herein as component carriers can be aggregated such that a communication device may simultaneously communicate one or multiple component carriers depending on its capabilities. It is noted that the component carriers of an aggregated carrier can be provided by different cells.

For example, an LTE-Advanced mobile communication device with reception capability beyond 20 MHz can simultaneously receive on multiple 20 MHz component carriers. In the shown example a plurality of release 8 bandwidth "chunks", or component carriers, are combined together to form M x release 8 bandwidth (BW). In the example M = 5, resulting 5 x 20MHz = 100MHz bandwidth.

As the LTE-Advanced communication devices may receive/transmit on multiple component carriers simultaneously higher bandwidths are possible. The carrier aggregation is at present considered for LTE-Advanced to support downlink transmission bandwidths larger than 20 MHz, but the use thereof is naturally not restricted by this. A requirement that has been proposed for LTE-A is that it should operate in spectrum allocations of different sizes including wider spectrum allocations than those of the current LTE release 8 to achieve the peak data rate of 100Mbit/s for high mobility and 1 Gbit/s for low mobility.

If carrier aggregation is employed the control channel(s) can be designed in various manners. For example, in LTE-A a Physical Downlink Control Channel (PDCCH) can be provided as a separate PDCCH per assigned component carrier. Alternatively, only one global PDCCH can be provided for signalling the allocations for all component carriers jointly. In the latter alternative, a component carrier containing the PDCCH can be called the primary component carrier and the other component carriers without the PDCCH can be called secondary component carriers. It is noted that in this specification the term primary component carrier is intended to cover any component carrier a failure of which would result a failure of the aggregated carrier.

A random access channel, for example a physical random access channel (PRACH) resource can be provided in each component carrier of an aggregated carrier. This can be so to provide increased chance for a communication device to access the system and larger frequency diversity, and hence to reduce collision probability.

An embodiment for controlling communications on an aggregated carrier comprising at least two component carriers is now described with reference to the flowchart of Figure 4. In the shown embodiment a communication device, for example the mobile communication device shown in Figures 1 and 2, communicates data at 100 through a configured set of component carriers. A component carrier of the set can provide the primary component carrier of the configured set whilst at least one secondary component carrier can also be included in the set. At 102 a trigger for a re-establishment procedure is detected. More particularly, a failure of a predefined component carrier is detected by the communication device. In the example the predefined component carrier comprises the primary component carrier. The detection may be based on e.g. a timer expiry. An example of such is the expiry of T310 timer of the LTE. Other examples for triggers include a random access problem indication from medium access control (MAC) and an indication from radio link control (RLC) that the maximum number of retransmissions has been reached. However, these are only examples and any other trigger may also be utilised in here.

At 104 the control apparatus of the communication device can try to rectify the situation by identifying at least one such component carrier in the configured set that can be used for connection re-establishment. If such a carrier is found, the communication device can request at 106 for connection re-establishment through the at least one identified component carrier. For example, the communication device can use a random access procedure to a cell that is associated with a secondary component carrier that has been determined as being suitable for the re-establishment procedure. If the reestablishment procedure can be successfully completed, communications can continue through re-established set of component carriers. In accordance with a possibility the selected component carrier can be made the new primary carrier.

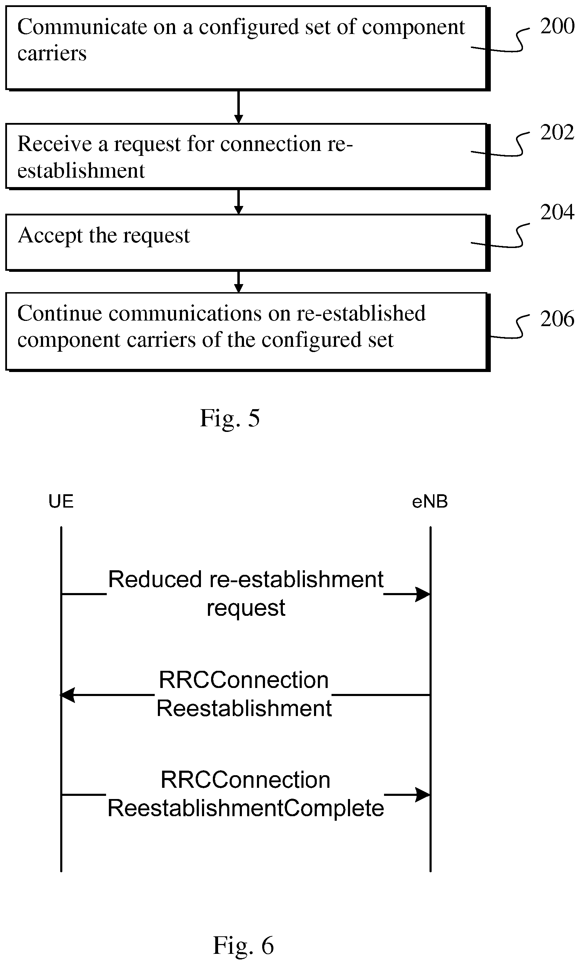

Flowchart of Figure 5 illustrates the operation at a base station. The base station communicates at 200 with a communication device on a configured set of component carriers comprising a primary component carrier of the configured set and at least one secondary component carrier. As a result of the procedure described above in steps 102 to 106 the base station can receive at 202 a request from the communication device for connection re-establishment. The request is sent by means of a secondary component carrier of the configured set the communication identified as suitable member of the configured set for sending the request. The request may be in the form of a reduced re-establishment request. The base station may then either accept or reject the request at 204. If the request is accepted and the communication device completes the re-establishment procedure, communications with the communications device can be continued at 206 on the re-established component carriers.

The base station can change the configuration of the component carrier set for the user equipment, as indicated by the optional step 205. Thus, if required, the component carrier set may be reconfigured. For example, one or more new component carriers can be attached to the set. This can be done, for example, to compensate the loss of the primary carrier and/or because of changed capacity requirements. For example, once a primary carrier has been changed, a reconfiguration procedure may follow to remove the original primary carrier from the set. In accordance with a possibility the removal takes place only if the base station determines that the original primary carrier is no longer usable. Adding one or more new component carriers can be based on measurements by the user equipment and/or information about user traffic amounts. Instructions for this can be added in a connection reconfiguration message by the base station if this is considered as appropriate.

In accordance with an embodiment a higher priority is given to cells that provide component carriers belonging to the configured component carrier set at re-establishment after a radio link failure (RLF). A different re-establishment procedure can take place on such component carriers that belong to the configured component carrier set than on those that are possible but do not belong to the configured set. Thus, upon failure of the primary component carrier of the configured set, the user equipment can prioritise component carriers in the configured component carrier set for the re-establishment procedure. For example, the cell that corresponds to a component carrier that belongs to the configured set can be pri-oritized over cells that do not belong to the set when performing cell selection or reselection. According to another possibility a plurality of cells each being associated with a component carrier of the set is prioritised over cells that are not associated with the component carriers belonging to the configured set. If a prioritised component carrier is found to be available, for example if it is found that there is a component carrier that offers random access channel (RACH), the user equipment can perform a random access procedure on that component carrier to initiate the re-establishment procedure.

In accordance with an embodiment component carriers of the configured set are also prioritised or weighted relative to each other. This prioritisation can be decided by the base station. For example, the base station can base its decision in this regard on factors such as load and/or component carrier coverage, and so on.

The re-establishment procedure can be provided in the following manner. A new cause for re-establishment can be defined in the protocols and/or standards to address a component carrier failure. Upon detection of a failure of a predefined component carrier, for example the primary carrier, a user equipment may first try to find a suitable cell among the configured component carriers. According to an embodiment, the re-establishment procedure can skip the cell selection step and ignore all criteria that make a cell suitable for selection. Instead, a random access channel (RACH) access on any component carrier that has been identified as belonging to the configured set of component carriers may be provided.

Figure 6 shows a signalling flow chart in accordance with a certain embodiment. If a cell associated with a component carrier within a configured component carrier set is selected by user equipment in response to detection of a failure of the primary component carrier, the user equipment can send a re-establishment request message by performing a random access procedure on the selected cell. The request message from user equipment can be a message that is simpler than what is required for example by LTE Release 8 since the eNB still has the user equipment in connection via other component carriers than the failed primary component carrier. Thus, instead of sending for example a 'RRCConnectionReestablishmentRequest' message, as defined in 3GPP technical specification TS 36.331 release 9, which contains Cell Radio Network Temporary Identifier (C-RNTI), Physical Cell Identity (PCI), and ShortMAC-I information, a reduced re-establishment request can be sent. According to a possibility the user equipment can send a 'RRCConnectionReestablishmentRequest' message in accordance with 3GPP LTE release 8 even if the user equipment performs random access to the component carrier it has identified as belonging to the configured component carrier set.

The cell can then either accept or reject the request. Since the user equipment context is in the same eNB the cell can accept the request and indicate this for example in a 'RRCConnectionReestablishment' message. If the request is for some reason rejected, a reject message is send back to the user equipment. The user equipment may then take appropriate action, for example go to idle state.

In case an acceptance of the request is received, the user equipment can send a 'RRCConnectionReestablishmentComplete' message to end the procedure successfully. The user equipment can then activate the rest of the radio bearers, or data radio bearers (DRB) and signalling radio bearers (SRB), for example SRB2 without a need for an additional reconfiguration step, for example a 'RRCConnectionReconfiguration' step.

If no component carrier in a component carrier set can be used for the re-establishment procedure, a re-establishment procedure as defined in 3GPP LTE release 8 can take place.

The required data processing apparatus and functions of a base station apparatus as well as an appropriate communication device may be provided by means of one or more data processors. The described functions may be provided by separate processors or by an integrated processor. The data processing may be distributed across several data processing modules. A data processor may be provided by means of, for example, at least one chip. Appropriate memory capacity can also be provided in the relevant nodes. An appropriately adapted computer program code product or products may be used for implementing the embodiments, when loaded on an appropriate data processing apparatus, for example for determining if reduced re-establishment request is to be communicated in a processor apparatus associated with the communication device of Figure 2 and/or to detect if a reduced re-establishment message is received at the base station 12 shown in Figure 1. The program code product for providing the operation may be stored on, provided and embodied by means of an appropriate carrier medium. An appropriate computer program can be embodied on a computer readable record medium. A possibility is to download the program code product via a data network.

The further development of LTE-A should be backwards compatible with Release 8 LTE in the sense that a Release 8 LTE terminal can work also in LTE-A system and that a LTE-A terminal can work in a Release 8 LTE system. For this reason, backward-compatibility with the existing LTE compatible devices, for example with devices known as LTE release 8 compatible user equipment (R8 UE) would be desired. The backwards compatibility can be provided in the herein described examples because in case of release 8 there will not be any configured sets, and thus no member of such a set can be identified, and the user equipment can simply revert to re-establishment in accordance with LTE release 8. On the other hand, release 8 user equipment does not even attempt to perform a simplified re-establishment.

Prioritizing at least one component carrier belonging to a configured component carrier set when performing random access can be used to keep the user equipment within the same base station. This can be used to assist in simplifying the re-establishment procedure in the case of failure of the primary component carrier or similar predefined carrier essential for the operation of the aggregated carrier. In certain embodiments re-establishment request signalling overhead can be reduced, in particular if reduced re-establishment request message format, for example a reduced 'RRCConnectionReestablishmentRequest' message, is used. A need to have additional RRC connection reconfiguration step to activate a second signalling radio bearer and data radio bearers (DRBs) may be avoided.

It is noted that whilst embodiments have been described in relation to LTE-Advanced, similar principles can be applied to any other communication system where a carrier comprising a multiple of component carriers is employed. Also, instead of carriers provided by a base station a carrier comprising component carriers may be provided by a communication device such as a mobile user equipment. For example, this may be the case in application where no fixed equipment provided but a communication system is provided by means of a plurality of user equipment, for example in adhoc networks. Therefore, although certain embodiments were described above by way of example with reference to certain exemplifying architectures for wireless networks, technologies and standards, embodiments may be applied to any other suitable forms of communication systems than those illustrated and described herein. It is also noted herein that while the above describes exemplifying embodiments of the invention, there are several variations and modifications which may be made to the disclosed solution without departing from the scope of the present invention as defined by the appended claims.

## Claims

1. A method comprising:
communicating data on a configured set of component carriers of a wireless or
mobile communications system;
detecting a trigger for connection re-establishment.
wherein the detecting comprises detecting a radio link failure of a predefined component carrier, wherein the predefined component carrier comprises a primary component carrier of the configured set of component carriers;
identifying at least one component carrier in the configured set that can be used for the connection re-establishment;
requesting for connection re-establishment through the at least one identified component carrier; and
prioritising at least one cell providing at least one of the component carriers of the configured set over other cells available for the connection re-establishment in response to a radio link failure, wherein upon failure of the primary component carrier of the configured set, the at least one of the component carriers of the configured set of component carriers is prioritised for the re-establishment, wherein the cell that corresponds to a component carrier that belongs to the configured set is prioritised over cells that do not belong to the configured set of component carriers.

2. A method as claimed in any preceding claim, comprising performing a different re-establishment procedure for a component carrier belonging to the configured set than what would be performed for other carriers available as component carriers.

3. A method as claimed in any preceding claim, wherein the requesting comprises sending of a reduced connection re-establishment request on the at least one identified component carrier.

4. A control apparatus for a communication device adapted for communications on a configured set of component carriers of a wireless or mobile communications system, the control apparatus being configured to
detect a trigger for connection re-establishment, comprising to detect a radio link failure of a predefined component carrier, wherein the predefined component carrier comprises a primary component carrier of the configured set of component carriers,
identify at least one component carrier in the configured set that can be used for the connection re-establishment,
request for connection re-establishment through the at least one identified component carrier, and
prioritise at least one cell providing at least one of the component carriers of the configured set over other cells available for the connection re-establishment in response to a radio link failure, wherein upon failure of the primary component carrier of the configured set, the at least one of the component carriers of the configured set of component carriers is prioritised for the re-establishment, wherein the cell that corresponds to a component carrier that belongs to the configured set is prioritised over cells that do not belong to the configured set of component carriers.

5. A control apparatus as claimed in claim 4, wherein the control apparatus is configured to trigger the connection re-establishment in response to a radio link failure of a predefined component carrier.

6. A control apparatus as claimed in claim 4 or 5, wherein the connection re-establishment comprises re-establishment of at least one cell corresponding to at least one of the components carriers of the configured set.

7. A control apparatus as claimed in any of claims 4 to 6, wherein the control apparatus is configured to generate a reduced re-establishment request and send the generated reduced re-establishment request on the at least one identified component carrier.

8. A mobile communication device comprising the control apparatus according to any of claims 4 to 7.

9. A computer program comprising program code means adapted to perform the steps of any of claims 1 to 3 when the program is run on a data processing apparatus.

## Patentansprüche

1. Verfahren, das Folgendes umfasst:
Kommunizieren von Daten auf einem ausgelegten Satz von Komponententrägern eines drahtlosen oder eines mobilen Kommunikationssystems;
Detektieren eines Auslösers für einen Verbindungsneuaufbau.
wobei das Detektieren das Detektieren eines Funklinkausfalls eines vordefinierten Komponententrägers umfasst, wobei der vordefinierte Komponententräger einen primären Komponententräger des ausgelegten Satzes von Komponententrägern umfasst;
Identifizieren von mindestens einem Komponententräger im ausgelegten Satz, der für den Verbindungsneuaufbau verwendet werden kann;
Anfordern des Verbindungsneuaufbaus über den mindestens einen identifizierten Komponententräger; und
Priorisieren von mindestens einer Zelle, die mindestens einen der Komponententräger des ausgelegten Satzes bereitstellt, über andere Zellen, die für den Verbindungsneuaufbau verfügbar sind, in Reaktion auf einen Funklinkausfall, wobei nach Ausfall des primären Komponententrägers des ausgelegten Satzes der mindestens eine der Komponententräger des ausgelegten Satzes von Komponententrägern für den Neuaufbau priorisiert wird, wobei die Zelle, die einem Komponententräger entspricht, der zum ausgelegten Satz gehört, über Zellen, die nicht zum ausgelegten Satz von Komponententrägern gehören, priorisiert wird.

2. Verfahren nach einem der vorhergehenden Ansprüche, das für einen Komponententräger, der zum ausgelegten Satz gehört, das Durchführen einer anderen Neuaufbauprozedur umfasst als der, die für andere Träger, die als Komponententräger verfügbar sind, durchgeführt würde.

3. Verfahren nach einem der vorhergehenden Ansprüche, wobei das Anfordern das Senden einer reduzierten Verbindungsneuaufbauanforderung auf dem mindestens einen identifizierten Komponententräger umfasst.

4. Steuereinrichtung für eine Kommunikationsvorrichtung, die für die Kommunikation auf einem ausgelegten Satz von Komponententrägern eines drahtlosen oder eines mobilen Kommunikationssystems angepasst ist, wobei die Steuereinrichtung zu Folgendem ausgelegt ist
Detektieren eines Auslösers für einen Verbindungsneuaufbau, das das Detektieren eines Funklinkausfalls eines vordefinierten Komponententrägers umfasst, wobei der vordefinierte Komponententräger einen primären Komponententräger des ausgelegten Satzes von Komponententrägern umfasst,
Identifizieren von mindestens einem Komponententräger im ausgelegten Satz, der für den Verbindungsneuaufbau verwendet werden kann,
Anfordern des Verbindungsneuaufbaus über den mindestens einen identifizierten Komponententräger, und
Priorisieren von mindestens einer Zelle, die mindestens einen der Komponententräger des ausgelegten Satzes bereitstellt, über andere Zellen, die für den Verbindungsneuaufbau verfügbar sind, in Reaktion auf einen Funklinkausfall, wobei nach Ausfall des primären Komponententrägers des ausgelegten Satzes der mindestens eine der Komponententräger des ausgelegten Satzes von Komponententrägern für den Neuaufbau priorisiert wird, wobei die Zelle, die einem Komponententräger entspricht, der zum ausgelegten Satz gehört, über Zellen, die nicht zum ausgelegten Satz von Komponententrägern gehören, priorisiert wird.

5. Steuereinrichtung nach Anspruch 4, wobei die Steuereinrichtung dazu ausgelegt ist, den Verbindungsneuaufbau in Reaktion auf einen Funklinkausfall eines vordefinierten Komponententrägers auszulösen.

6. Steuereinrichtung nach Anspruch 4 oder 5, wobei der Verbindungsneuaufbau den Neuaufbau von mindestens einer Zelle, die mindestens einem der Komponententräger des ausgelegten Satzes entspricht, umfasst.

7. Steuereinrichtung nach einem der Ansprüche 4 bis 6, wobei die Steuereinrichtung dazu ausgelegt ist, eine reduzierte Neuaufbauanforderung zu erzeugen und die erzeugte reduzierte Neuaufbauanforderung auf dem mindestens einen identifizierten Komponententräger zu senden.

8. Mobile Kommunikationsvorrichtung, die die Steuereinrichtung nach einem der Ansprüche 4 bis 7 umfasst.

9. Computerprogramm, das Programmcodemittel umfasst, die angepasst sind, die Schritte von einem der Ansprüche 1 bis 3 durchzuführen, wenn das Programm auf einer Datenverarbeitungseinrichtung läuft.

## Revendications

1. Procédé comprenant :
la communication de données sur un ensemble configuré de porteuses composantes d'un système de communication sans fil ou mobile ;
la détection d'un déclencheur pour un rétablissement de connexion, dans lequel la détection comprend la détection d'une défaillance de liaison radio d'une porteuse composante prédéfinie, dans lequel la porteuse composante prédéfinie comprend une porteuse composante primaire de l'ensemble configuré de porteuses composantes ;
l'identification d'au moins une porteuse composante dans l'ensemble configuré qui peut être utilisée pour le rétablissement de connexion ;
la demande d'un rétablissement de connexion par le biais de l'au moins une porteuse composante identifiée ; et
la priorisation d'au moins une cellule fournissant au moins l'une des porteuses composantes de l'ensemble configuré par rapport à d'autres cellules disponibles pour le rétablissement de connexion en réponse à une défaillance de liaison radio, dans lequel, lors d'une défaillance de la porteuse composante primaire de l'ensemble configuré, l'au moins une des porteuses composantes de l'ensemble configuré de porteuses composantes est priorisée pour le rétablissement, dans lequel la cellule qui correspond à une porteuse composante qui appartient à l'ensemble configuré est priorisée par rapport à d'autres cellules qui n'appartiennent pas à l'ensemble configuré de porteuses composantes.

2. Procédé selon une quelconque revendication précédente, comprenant la réalisation d'une procédure de rétablissement différente pour une porteuse composante appartenant à l'ensemble configuré que celle qui serait réalisée pour d'autres porteuses disponibles comme porteuses composantes.

3. Procédé selon une quelconque revendication précédente, dans lequel la demande comprend l'envoi d'une demande de rétablissement de connexion réduite sur l'au moins une porteuse composante identifiée.

4. Appareil de commande pour un dispositif de communication adapté pour des communications sur un ensemble configuré de porteuses composantes d'un système de communication sans fil ou mobile, l'appareil de commande étant configuré pour
détecter un déclencheur pour un rétablissement de connexion, comprenant le fait de détecter une défaillance de liaison radio d'une porteuse composante prédéfinie, dans lequel la porteuse composante prédéfinie comprend une porteuse composante primaire de l'ensemble configuré de porteuses composantes,
identifier au moins une porteuse composante dans l'ensemble configuré qui peut être utilisée pour le rétablissement de connexion,
demander un rétablissement de connexion par le biais de l'au moins une porteuse composante identifiée, et
prioriser au moins une cellule fournissant au moins l'une des porteuses composantes de l'ensemble configuré par rapport à d'autres cellules disponibles pour le rétablissement de connexion en réponse à une défaillance de liaison radio, dans lequel, lors d'une défaillance de la porteuse composante primaire de l'ensemble configuré, l'au moins une des porteuses composantes de l'ensemble configuré de porteuses composantes est priorisée pour le rétablissement, dans lequel la cellule qui correspond à une porteuse composante qui appartient à l'ensemble configuré est priorisée par rapport à d'autres cellules qui n'appartiennent pas à l'ensemble configuré de porteuses composantes.

5. Appareil de commande selon la revendication 4, dans lequel l'appareil de commande est configuré pour déclencher le rétablissement de connexion en réponse à une défaillance de liaison radio d'une porteuse composante prédéfinie.

6. Appareil de commande selon la revendication 4 ou 5, dans lequel le rétablissement de connexion comprend le rétablissement d'au moins une cellule correspondant à au moins l'une des porteuses composantes de l'ensemble configuré.

7. Appareil de commande selon l'une quelconque des revendications 4 à 6, dans lequel l'appareil de commande est configuré pour générer une demande de rétablissement réduite et envoyer la demande de rétablissement réduite générée sur l'au moins une porteuse composante identifiée.

8. Dispositif de communication mobile comprenant l'appareil de commande selon l'une quelconque des revendications 4 à 7.

9. Programme d'ordinateur comprenant des moyens de code de programme adaptés pour réaliser les étapes de l'une quelconque des revendications 1 à 3 lorsque le programme est exécuté sur un appareil de traitement de données.
